# EUROPEAN PATENT SPECIFICATION

(11) **EP 4 229 255 B1**
(45) Date of publication and mention of the grant of the patent: **12.03.2025**
(21) Application number: 21798137.2
(22) Date of filing: 13.10.2021
(51) Int. Cl.: E04G 21/04, B33Y 10/00, B33Y 30/00, B33Y 80/00, B29C 64/232, B29L 15/00

(54) **THREE-DIMENSIONAL PRINTER SYSTEM AND TO PRODUCE A PRINTED OBJECT**
DREIDIMENSIONALES DRUCKERSYSTEM UND VERFAHREN ZUR HERSTELLUNG EINES GEDRUCKTEN OBJECTES
SYSTEME D'IMPRIMANTE TRIDIMENSIONNELLE ET PROCÉDÉ POUR PRODUIRE UN OBJET IMPRIMÉ

(30) Priority: 13.10.2020 IT 202000024109
(43) Date of publication of application: 23.08.2023
(73) Proprietor: Alma Mater Studiorum Universita di Bologna, 40126 Bologna (IT)
(72) Inventor: PALERMO, Michele, 40131 Bologna (IT); TROMBETTI, Tomaso, 40134 Bologna (IT); LAGHI, Vittoria, 48015 Cervia (IT)
(74) Representative: Petraz, Gilberto Luigi
(86) International application number: PCT/IT2021/050329
(87) International publication number: WO 2022/079746

(56) References cited:
- EP-A1- 3 072 670
- CN-U- 204 052 899
- US-A1- 2015 076 732
- US-A1- 2017 016 244

## Description

### FIELD OF THE INVENTION

The present invention concerns a method to produce a three-dimensional object by means of a three-dimensional printer and a three-dimensional printing system comprising a three-dimensional printer and a three-dimensional object produced by means of the three-dimensional printer.

### BACKGROUND OF THE INVENTION

Three-dimensional printing systems have been known for several decades, and have become increasingly widespread, for the production, using additive production techniques, of three-dimensional objects formed by laying one on the other a succession of layers of suitable materials in a liquid or semi-liquid or molten state, which are configured to solidify after being deposited.

The first three-dimensional printer models made available on the market provided a printing head that was moved following a predefined path, releasing a semi-liquid substance so as to form a layered structure with it. For this purpose, the printing head is mounted mobile inside a generally closed support structure.

These printer models, also called fixed, were generally configured to be used in a single location, generally inside a dedicated office or studio. These models made it possible to print only objects of limited size and in any case limited by the sizes of the cavity defined by the support structure, inside which the printing head can move. This limit was relative both to the longitudinal sizes and also to the lateral sizes, that is, those perpendicular to the axis of development.

In order to be able to print larger objects, three-dimensional printing systems have been developed over time in which the printing head is mounted at the end of a robotic articulated arm, which allows a greater height of the objects, and also increased lateral sizes. However, even this type of three-dimensional printer is subject to limitations in the sizes of the objects. For example, they are not able to create structures of a size comparable to those of houses or larger buildings.

Alternatively, so-called mobile printing systems have also been developed, that is, they are not constrained inside a fixed support structure. These three-dimensional printers generally comprise an articulated arm mounted on a mobile base, for example equipped with wheels or belts. The printing head is mounted at the free end of the articulated arm.

This type of printer has made it possible to create three-dimensional objects in situ, that is, directly on a place of interest, for example a construction site.

However, even these printer models suffer from a limitation in the sizes of the objects that can be produced, in particular their height, which is in any case limited by the maximum extension of the robotic arm that carries the printing head.

Three-dimensional printing systems are also known for the on site construction of houses or buildings, which provide a modular support structure, in which each module has sizes of several meters, so as to be able to potentially print a building or part of it (such as for example one floor of the building). These printing systems have the limit that the support structure has to be assembled and disassembled every time a new building is to be built.

A more recent type of three-dimensional printing system is configured to rest and move directly on the object being printed. In this way it is possible to at least increase the vertical sizes of the objects that can be printed.

For example, US-A-2017/016244 shows a mobile three-dimensional printing system mounted on a mobile support equipped with a pair of wheels that engage in corresponding racks made inside the object being printed. However, this solution entails a constraint in the internal section of the object, which must be such as to allow a correct interaction between each of the wheels of the support and the corresponding racks, and therefore constant to maintain this interaction along the whole object. In particular, the internal section of the object being printed must not exceed a predetermined value, which entails a limitation in the lateral sizes of the object. Another limitation of this system is that it is configured to deliver concrete only.

US-A-2015/076732 describes a three-dimensional printing system equipped with a printer mounted on a movement mechanism that comprises three toothed wheels. The printer is configured to print an object equipped with racks to interact with the toothed wheels. The printer is contained in a closed structure with limited lateral sizes, which also limits the lateral sizes of the object to be printed. Furthermore, the system in this document is designed to function in space or in any case in environments with microgravity or in zero gravity, and in practice cannot function correctly in environments with earth pressure.

EP-A-3072670 describes a three-dimensional printing system comprising a printer mounted on a movement mechanism configured to be rested on the external surface of the object being printed. To this purpose, the system provides four wheels mounted on respective arms and pressed, during use, against the surface of the object by corresponding pressure means. However, this does not allow to guarantee at all times, and under all conditions, a perfect grip of the wheels on the object being printed.

CN-U-204052899 discloses a three-dimensional printing system comprising a printer and a three-dimensional object printed by the printer. The object is provided with a guide rail which is not printed together with the object, but is attached thereto. The guide rail is configured to house sliding a support slipper of the printer. Having the guide rail as a separate element entails the need of attaching it to the printed object while it is stamped, thereby requiring to stop the printing process.

There is therefore a need to perfect a three-dimensional printer and a method to produce a three-dimensional object that can overcome at least one of the disadvantages of the state of the art.

In particular, one purpose of the present invention is to provide a three-dimensional printer that is able to print three-dimensional objects of even greater sizes than those already obtainable, in particular along the axis of development of the object.

Another purpose of the present invention is to provide a three-dimensional printer that can function with any type of printing substance or material.

Yet another purpose is to provide a three-dimensional printer that can be adapted to any sector in the state of the art, and which is able to print any type of object.

Another purpose is to provide a three-dimensional printer that is connected in a stable and safe manner to the object being printed.

Another purpose is to perfect a method to produce a three-dimensional object, by means of three-dimensional printing, that allows to create three-dimensional objects without constraints of size, in particular along the longitudinal axis of development.

Yet another purpose is to perfect a method to produce a three-dimensional object, by means of three-dimensional printing, that allows to ensure a good interaction between the printer and the object being printed in any operating condition.

It is also a purpose of the present invention to obtain, by means of said method and using said printer, a three-dimensional object able to interact with the three-dimensional printer in order to obtain the purposes described above.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, Applicant has developed a three-dimensional printing system and perfected a method to produce three-dimensional objects, which overcome the limits of the state of the art and eliminate the defects present therein.

The inventive idea underlying the present invention is to make the printer move on the three-dimensional object itself, while it is produced, through a guide and retention system integrated in the three-dimensional object to be printed. With the term "integrated" we mean that the guide and retention system is made in a single piece with the three-dimensional object in question.

For this purpose, the printer, which is of the mobile type, is equipped with a movement system comprising one or more contact elements and one or more abutment elements configured to respectively come into contact with the guide element and the retention element which are integrated in the object being produced.

It is provided to produce one or more guide elements and one or more retention elements on the three-dimensional object, which are integrated in the object itself and are configured to interact respectively with the contact elements and the abutment elements of the printer in such a way as to allow it to move on the object being produced.

According to one aspect, there is provided a method to produce a three-dimensional object as in claim 1, by means of three-dimensional printing. The three-dimensional object comprises one or more guide elements integrated in at least one external lateral surface of the printed object, each equipped with at least one retention element. Advantageously, the method provides that the printing is performed by means of a mobile three-dimensional printer comprising one or more support members each equipped with a respective contact element configured to come into contact with a guide element of the three-dimensional object, and provided with at least one abutment element configured to interact with the at least one retention element. This interaction allows to retain the support member in the vicinity of the lateral surface of the printed object.

Advantageously, the retention element comprises an abutment surface inclined with respect to the lateral surface of the printed object and oriented toward it. Conversely, the abutment member also comprises an abutment surface inclined with respect to the support member and oriented toward it. The abutment surface of each retention element is configured to come into contact with an abutment surface of each abutment member.

In accordance with some embodiments, the retention element comprises at least one fin that extends from the lateral surface of the object, preferably a pair of fins. Advantageously, the fin has an extremal portion inclined with respect to the lateral surface of the object.

The method provides to print, at the same time as the three-dimensional object, one or more guide elements integrated in the three-dimensional object. The guide elements are configured to interact with the contact element of the support member of the three-dimensional printer. The guide elements are provided with retention elements integrated in at least one external lateral surface of the three-dimensional object and configured to interact with at least one abutment member in such a way as to retain the onre or more support memners in the vicinity of the lateral surface of the three-dimensional object and maintain the contact elements inContact with the guide elements. In accordance with some embodiments, the three-dimensional object comprises a plurality of lateral surfaces, and a plurality of guide elements and retention elements integrated in the lateral surfaces.

By lateral surface we mean a surface that extends, at least partly, along a plane that is parallel, or substantially parallel, to a homologous plane passing through the longitudinal axis of development of the object.

At least one guide element and at least one retention element are integrated in the lateral surface of the three-dimensional object. In the event that the three-dimensional object is equipped with several lateral surfaces, it is advantageous to provide a guide element and a retention element integrated in each of them.

In a preferential way, the method provides at least one step of displacing the three-dimensional printer on the three-dimensional object during its formation, by means of printing. More preferentially, the displacement of the three-dimensional printer on the three-dimensional object occurs by means of the interaction between the contact elements and the guide elements.

In accordance with some embodiments, the guide elements are oriented in such a way as to be parallel to the axis along which the lateral surface develops, that is, substantially parallel to the axis of development of the three-dimensional object.

In accordance with some embodiments, the guide element is of the continuous type, that is, configured to allow a continuous displacement of the three-dimensional printer. A continuous guide element can comprise, for example, at least one rack. In these embodiments, the contact element can be configured as a toothed wheel.

According to alternative embodiments not covered by the invention, the guide element is of the discrete type. In this case, the object comprises a plurality of discrete guide elements. These are advantageously disposed along a predetermined path on the lateral surface of the object being formed.

In accordance with some embodiments, the guide element comprises two racks located parallel to each other made on as many lateral surfaces, which can be contiguous and adjacent, or opposite.

In a preferred embodiment, the object comprises a plurality of lateral surfaces, contiguous to each other in such a way as to form a closed perimeter profile; there being provided a guide element made on each lateral surface.

Preferably, all the guide elements are the same and parallel to each other.

In accordance with other embodiments, the three-dimensional object comprises at least one guide element of the continuous type and at least one guide element of the discrete type.

According to another aspect, there is provided a three-dimensional printing system as in claim 5, comprising a three-dimensional printer provided with at least one mobile support device, and a three-dimensional object provided with one or more guide elements that each comprise at least one retention element integrated in at least one external lateral surface thereof, and produced by means of the three-dimensional printer.

The three-dimensional printer is configured to move on the three-dimensional object during its production.

More precisely, the mobile support device is configured to interact with one or more guide elements of the object to allow the displacement of the three-dimensional printer on the three-dimensional object.

The mobile support device comprises one or more support members, each provided with one or more contact elements and at least one abutment member. The guide and retention systems, in turn, are configured to interact with the contact elements and each comprise at least one retention element configured to interact with the abutment members, in such a way as to retain the one or more support members in the vicinity of the lateral surface of the three-dimensional object and maintain the contact elements in contact with the guide elements. The guide elements are made in a single piece with the three-dimensional object.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of a printing system which includes a three-dimensional printer according to some embodiments described here and a three-dimensional object obtained by means of the printer;
- fig. 2 is a perspective view of a three-dimensional printer according to some embodiments described here, shown during the production of a three-dimensional object;
- fig. 3 is a lateral view of an object produced with the method according to a first embodiment;
- fig. 4 is a cross-section view of an object produced with the method according to some embodiments, taken according to plane IV-IV of fig. 3;
- fig. 5 is an enlarged lateral view of the detail V of fig. 2; and
- fig. 6 is a plan view of the same detail shown in fig. 5.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

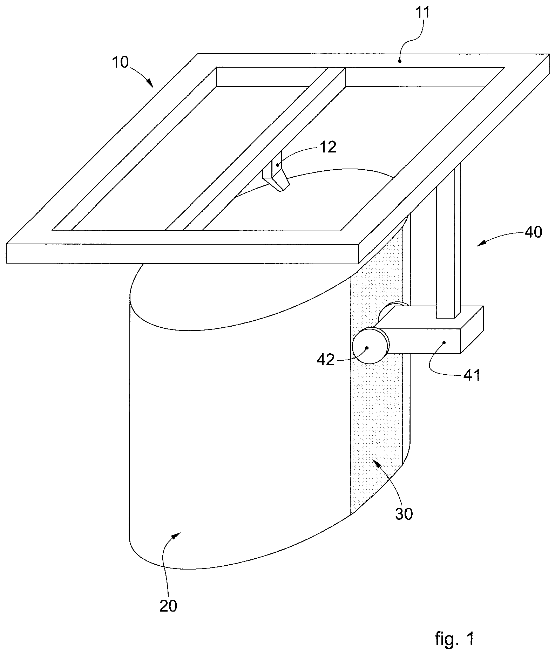

Fig. 1 shows a printing system, comprising a three-dimensional printer indicated as a whole with reference number 10. The three-dimensional printer 10 is of the mobile type, that is, it does not have a fixed support structure. Generally, the three-dimensional printer 10, or 3D printer, is configured to produce a three-dimensional object 20 by means of additive manufacturing techniques. The three-dimensional printer 10 comprises a bearing structure 11 on which a printing head 12 is mounted mobile.

The three-dimensional object 20 is provided with at least one integrated guide and retention system, which is produced at the same time as the three-dimensional object 20 itself, during printing. The guide and retention system comprises at least one guide element 30 and at least one retention element 32. Vice versa, the three-dimensional printer 10 is provided with a movement system configured to interact with the guide and retention system of the printed object. This movement system comprises one or more contact elements 42 and one or more abutment members 46A.

The three-dimensional printer 10 provides a mobile support device 40 (fig. 1) configured to interact with the guide element 30 of the three-dimensional object 20 and with the retention element 32.

More precisely, the mobile support device 40 comprises a support member 41, connected to the bearing structure 11 of the 3D printer 10, and a contact element 42 attached to the support member 41. The interaction between the 3D printer 10 and the three-dimensional object 20 occurs by means of the contact element 42 and the guide element 30 (fig. 1).

In particular, the 3D printer 10 is able to form the object 20 by depositing successive layers of the printing material through the printing head 12, according to modes known in the state of the art.

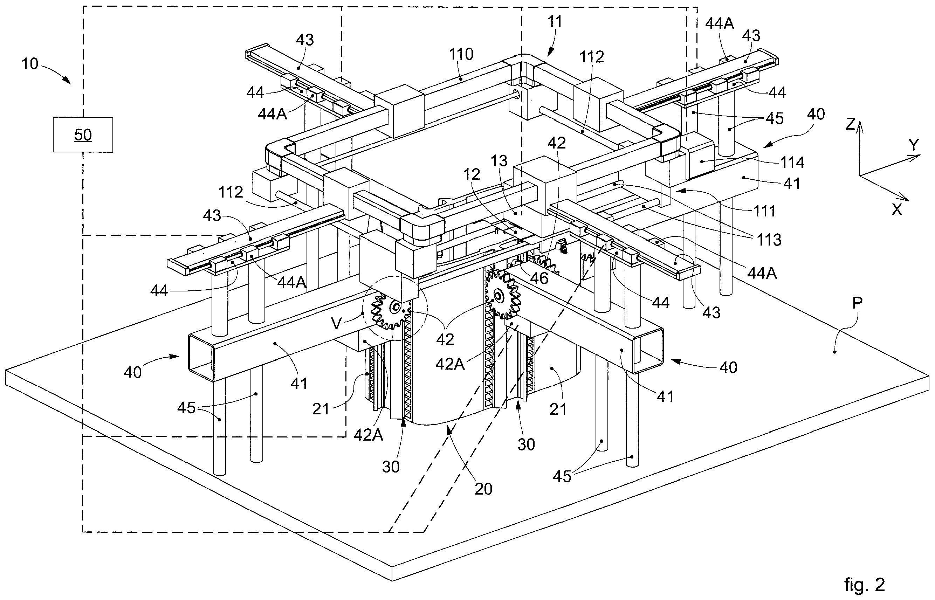

The 3D printer 10 deposits the printing substance or material on a plane, which identifies a base plane, indicated by the letter P in fig. 2, delivering the printing material along a predetermined path that defines a layer of the object 20.

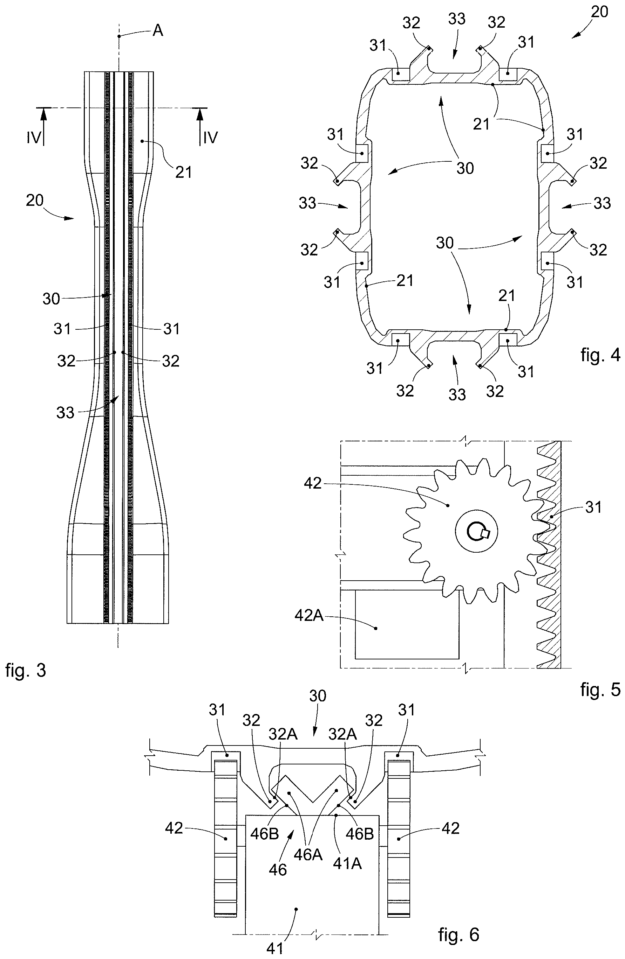

The object 20 is produced by placing a plurality of successive layers, thus defining an axis of development A of the object 20, typically perpendicular to the base plane P (figs. 2 and 3).

In the embodiments shown in the attached drawings, the base plane P is a substantially horizontal plane X-Y, while the axis of development A is substantially vertical and parallel to the vertical direction Z.

The printing head 12 is suitably connected to a source of printing substance or material, not shown in the drawings. The printing substance can be of any type whatsoever, for example a heated polymer, building material, metal powders, concrete, a mixture thereof, or others.

The bearing structure 11 can comprise a frame 110 suitably shaped in such a way as, for example, to define a printing zone within which the printing head 12 can move. In the example shown, the frame 110 has a rectangular shape; however, other shapes can be provided. More generally, the shaped frame 110 has a shape such as to have a geometric center, which advantageously is comprised on the axis of development A of the object 20.

The frame 110 supports a movement mechanism 111 to which the printing head 12 is connected in order to move the latter. It should be noted that, preferably, the movement mechanism 111 is configured in such a way as to give the printing head 12 at least two degrees of freedom in space, more preferably three degrees of freedom. In this way, the printing head 12 is able to move in the directions X-Y in such a way as to be able to cover the entire base plane P, and in the direction Z. In this way, after finishing depositing one layer, the movement mechanism 111 is driven in order to move the printing head 12 along the axis Z in such a way as to modify the vertical height of the printing head 12, for example raising it by the appropriate amount to allow it to deposit the next layer on top of the layer just formed.

According to the embodiment shown in the attached drawings, the movement mechanism 111 can comprise, for example, a pair of first guides 112 parallel to each other, and at least one second guide 113 perpendicular to the first guides 112. The second guide 113 is advantageously mounted sliding on the first guides 112, and is equipped with a motor member 114 so that it can be displaced along the first guides 112 (fig. 2).

The printing head 12 is conveniently mounted sliding on the second guides 113 and is provided with its own motor member 13 so that it can be displaced along the same second guides 113.

It can be surmised from the structure of the movement mechanism 111 that the movement of the printing head 12 is mainly contained in a movement plane which, during use, is advantageously parallel to the base plane P and therefore perpendicular to the axis of development A of the object 20.

Preferably, the 3D printer 10 comprises a control unit 50 to which the motor members 13, 114 are connected and which allows the individual and/or coordinated drive thereof. The control unit 50 can also be configured to command the delivery of the printing material.

The bearing structure 11 comprises one or more mobile support devices 40. In the example of fig. 2, four mobile support devices 40 are provided, each comprising a support member 41 configured to rest on a lateral surface 21 of the object 20 and each connected to a respective side of the shaped frame 31 (figs. 1 and 2). Obviously, there can be any number whatsoever of mobile support devices 40 according to the geometry of the frame 110 and/or the three-dimensional object 20 to be produced. It is preferable that the mobile support devices 40 are in a number and disposition such as to ensure a stable balance for the 3D printer 10 when it moves along the object 20.

For example, in the embodiment shown in the drawings, the object 20 has a substantially rectangular plan and comprises four lateral surfaces 21. The 3D printer 10 is equipped with four mobile support devices 40, each of which comprises a support member 41 provided to rest against a respective lateral surface 21 of the object 20. A smaller number of mobile support devices 40, for example two or three, can also be provided, provided that they are such as to ensure the stability of the 3D printer 10 while it rests on the object 20.

In accordance with some embodiments, the support members 41 are connected to the frame 110 by means of a fixed support 43 connected directly to the frame 110 and, preferably, with an elongated shape. In a preferential way, the fixed support 43 projects outside the frame 110 and is oriented perpendicularly with respect to the side of the frame 110 from which it departs.

The support members 41 are preferably mounted sliding on their fixed supports 43, for example they are each mounted on a respective slider 44 sliding along its own fixed support 43 (fig. 2) and moved by means of a corresponding motor member 44A advantageously connected to the control unit 50.

The slider 44 is favorably equipped with at least one guide rod 45 (in the example shown in fig. 1, each slider 44 comprises two guide rods 45) on which a respective support member 41 is mounted sliding. Advantageously, the guide rods 45 are oriented substantially parallel to the axis of development A, in such a way as to allow the displacement of the support members 41, relative to the bearing structure 11, in the same direction.

This allows to displace the bearing structure 11 with respect to the support members 41, thus displacing the printing head 12 along the axis Z, in addition to the movement in the plane X-Y.

The support members 41 are preferentially disposed below the bearing structure 110, more preferentially below the printing head 12.

In the example shown in the attached drawings, the object 20 is equipped with guide elements 30 of the continuous type. Each guide element comprises a pair of racks 31 disposed parallel to each other (figs. 3 and 4). In an advantageous way, the racks 31 are reciprocally distanced and a retention element is provided between them consisting of a pair of fins 32 which extend transversely from the lateral surface 21 of the object 20. Each pair of fins 32 defines a respective guide groove 33.

The fins 32 can be perpendicular with respect to the lateral surface 21 of the object 20, or, as shown in the drawings, have at least one portion inclined toward the guide groove 33. In this way, the surface 32A of the fins 32 facing toward the inside of the guide groove 33 acts as an abutment for a possible abutment member 46A to be inserted inside the guide groove 33, allowing a more stable and secure connection of the support member 41 to the guide element 30. The surface 32A therefore acts as an abutment surface.

It should be noted that, in correspondence with the guide elements 30, the thickness of the lateral surfaces 21 of the object 20 can be increased with respect to the rest of the object 20, in order to strengthen the guide elements 30 (fig. 4).

Each support member 41 comprises at least one contact element 42, preferably facing toward the object 20 during use. In particular, in the example shown, the support member 41 comprises a body with an elongated shape oriented perpendicularly, or substantially perpendicularly, to the corresponding lateral surface 21 of the object 20. The contact element 42 is located in correspondence with the free end of the body that faces toward the object 20.

As can be surmised from fig. 2, each support member 41 comprises a pair of contact elements 42, which in this example are toothed wheels, each configured to cooperate with a respective rack 31 (figs. 5 and 6). The toothed wheels 42 are rotatably mounted on their respective support member 41.

The toothed wheels 42 can each be equipped with a respective motor member 42A (figs. 2 and 5) for their movement. The motor members 42A can be connected to the control unit 50, in order to synchronize their movement and thus keep the 3D printer 10 oriented in the plane X-Y.

In the example shown, the support members 41 each comprise an extremal element 46 (figs. 1 and 6) which protrudes from the end of the body where the contact element 42 is located, and is configured to be inserted in the guide groove 33 determined by the fins 32. In particular, the extremal element 46 can comprise at least one, preferably at least two, abutment members 46A configured to come into contact with the internal surfaces 32A of the fins 32, as explained above. In particular, the extremal element 46 is configured substantially in the shape of a V, with two abutment members 46A that extend away from each other (fig. 6). Each abutment member 46A has its own abutment surface 46B oriented toward the respective support member 41, and preferably inclined with respect thereto.

In particular, the abutment surface 46B can be inclined with respect to the external surface 41A of the support member 41 by an angle comprised between 5° and 85°. It can also be provided that the abutment surface 46B is parallel to the external surface 41A of the support member 41, in particular the surface of its free end facing the lateral surface 21 of the printed object 20. In this case, the abutment member 46A is advantageously configured in the shape of an L. Likewise, the surface 32A of the fins 32 is also preferably made parallel to the external surface 21 of the printed object 20, for example by means of an L-shaped configuration.

As can be seen in fig. 6, the interaction between the surface 32A of each of the fins 32 and the abutment surfaces 46B of the abutment members 46A allows to retain the support member 41, and therefore also the toothed wheels 42, in the proximity of the lateral surface 21 of the printed object 20, and therefore also of the respective guide element 30. This guarantees that each toothed wheel 42 remains engaged with its respective rack 31, thus ensuring an optimized displacement of the printer 10 on the printed object.

The guide elements 30 are disposed externally on the lateral surfaces 21 of the object 20, and the contact elements 42 are oriented in such a way as to face the guide elements 30 in order to be able to correctly cooperate with the latter.

It should be noted that, in the example shown, in the guide elements 30 the racks 31 are disposed externally to the fins 32 that form the guide groove 33. The surfaces 32A of the two fins 32 face toward the guide groove 33 so as not to interfere with the toothed wheels 42.

It is possible to provide a configuration in which, for example, the fins are inclined toward the outside with respect to the groove 33, and that a single rack 31 is provided located between the two fins 32, that is, precisely in the groove 33. Obviously, in this case the corresponding support member 41 has a single toothed wheel 42 in a substantially centered position and two abutment members 46A positioned on each side of the toothed wheel 42 and inclined toward it, in such a way that the abutment surfaces 46B are parallel to the surfaces 32A of the fins 32.

Furthermore, it should be noted that, in the example shown, the guide elements 30 are rectilinear and oriented longitudinally to the axis of development A. However, it is possible to provide that the guide elements 30 are oriented transversely, perpendicularly or inclined with respect to the axis of development A, or that they have at least one longitudinal segment and at least one transverse segment.

It should also be noted that the guide elements can differ from each other, for example one can be of the continuous type and another of the discrete type, or that each guide element can have a continuous part and a discrete part.

The functioning of the 3D printer 10 provides to print the object 20 already provided with the guide elements 30 integrated.

The printing occurs in a known way, for example by means of additive manufacturing techniques. The guide elements 30 are created progressively, layer by layer, together with the object 20 itself.

For this purpose, the printing head 12 is moved in the movement plane until one layer of the object 20 is completed, then it is displaced along the axis Z by a distance such as to be able to print the next layer. For example, the distance of the displacement along the axis Z can correspond to the thickness of one layer.

In an initial phase of the formation of the object 20, during which the guide elements 30 are not yet sufficient to allow the 3D printer 10 to move on the object 20, the displacement of the printing head 12 in the direction Z is performed by displacing the bearing structure 11 with respect to the support members 41, which rest on the base plane P.

Once the guide elements 30 have been formed sufficiently to allow the contact elements 42 to interact with them, the 3D printer 10 can move on the object 20, as shown in figs. 1 and 2.

In the case of guide elements 30 of the continuous type, as in the example shown in the drawings, the displacement of the 3D printer 10 along the object 20 occurs by moving the toothed wheels 42 that cooperate with the racks 31.

In the case of guide elements 30 of the discrete type, not covered by the claims, the displacement of the 3D printer 10 along the object 20 occurs by displacing the support members 41 with respect to the bearing structure 11, in such a way that they reach a respective discrete guide element. The support members 41 are advantageously displaced one at a time, or in any case in such a way that at least two of them remain in contact with the object 20, in order to ensure a correct balance of the 3D printer 10 during its displacement.

Variations in the lateral sizes of the object 20 can be compensated for by displacing one or more of the sliders 44 along its fixed support 43.

It is clear that modifications and/or additions of parts or steps may be made to the method to produce a three-dimensional object and to the three-dimensional printing system as described heretofore, without departing from the field and scope of the present invention as defined by the claims. In the following claims, the sole purpose of the references in brackets is to facilitate reading: they must not be considered as restrictive factors with regard to the field of protection claimed in the specific claims.

## Claims

1. Method to produce a three-dimensional object (20), by means of a mobile three-dimensional printer (10) comprising one or more support members (41) each equipped with a respective contact element (42) configured to come into contact with the three-dimensional object (20) and each equipped with at least one abutment member (46A), comprising the step of printing said three-dimensional object (20), **characterized in that** it comprises the step of printing said three-dimensional object (20) and simultaneously of printing one or more guide elements (30), integrated in at least one external lateral surface (21) of said three-dimensional object (20), configured to interact with said contact elements (42) and provided with retention elements (32) integrated in the at least one external lateral surface (21) of said three-dimensional object (20), **characterized in that** the retention elements (32) are configured to interact with said at least one abutment member (46A) in such a way as to retain said one or more support members (41) in the vicinity of said lateral surface (21) of the three-dimensional object (20) and maintain said contact elements (42) in contact with said guide elements (30).

2. Method as in claim 1, **characterized in that** it provides at least one step of displacing the three-dimensional printer (10) on the three-dimensional object (20) during its formation.

3. Method as in claim 2, **characterized in that** the step of displacing the three-dimensional printer (10) occurs by means of the interaction between said contact elements (42) and said guide elements (30).

4. Method as in any claim hereinbefore, **characterized in that** said retention elements (32) each comprise an abutment surface (32A) inclined with respect to said lateral surface (21) of said three-dimensional object (20) and oriented toward it, and that said at least one abutment member (46A) comprises at least one abutment surface (46B) inclined with respect to said support member (41) and oriented toward it, wherein said abutment surface (32A) of said retention elements (32) is configured to come into contact with one said abutment surface (46B) of one said abutment member (46A).

5. Three-dimensional printing system, comprising a three-dimensional printer (10) provided with at least one mobile support device (40), and a three-dimensional object (20) provided with one or more guide elements (30) integrated in an external lateral surface (21) thereof, said three-dimensional object (20) being produced by means of said three-dimensional printer (10), and said mobile support device (40) being configured to interact with said one or more guide elements (30) to allow the displacement of said three-dimensional printer (10) on said three-dimensional object (20), wherein said mobile support device (40) comprises one or more support members (41) each provided with one or more contact elements (42) and with at least one abutment member (46A), and that said guide elements (30) are configured to interact with said one or more contact elements (42) and each comprise at least one retention element (32) configured to interact with said abutment members (46A) in such a way as to retain said one or more support members (41) in the vicinity of said lateral surface (21) of the three-dimensional object (20) and maintain said contact elements (42) in contact with said guide elements (30), **characterized in that** said guide elements (30) and retention elements (32) are made in a single piece with said three-dimensional object (20).

## Patentansprüche

1. Verfahren zur Herstellung eines dreidimensionalen Objektes (20), mittels eines mobilen dreidimensionalen Druckers (10) umfassend eines oder mehrere Stützelemente (41), die je mit einem jeweiligen Kontaktelement (42) versehen sind, das dazu eingerichtet ist, mit dem dreidimensionalen Objekt (20) in Kontakt zu kommen, und die je mit zumindest einem Anschlagelement (46A) versehen sind, umfassend den Schritt des Druckens des genannten dreidimensionalen Objektes (20), **dadurch gekennzeichnet, dass** es den Schritt des Druckens des genannten dreidimensionalen Objektes (20) und zur gleichen Zeit des Druckens eines oder mehrerer Führungselemente (30) umfasst, die in zumindest eine externe Seitenfläche (21) des genannten dreidimensionalen Objektes (20) integriert sind, die dazu eingerichtet sind, mit den genannten Kontaktelementen (42) zusammenzuwirken, und die mit Rückhalteelementen (32) versehen sind, die in die zumindest eine externe Seitenfläche (21) des genannten dreidimensionalen Objektes (20) integriert sind, **dadurch gekennzeichnet, dass** die Rückhalteelemente (32) dazu eingerichtet sind, mit dem genannten zumindest einen Anschlagelement (46A) derart zusammenzuwirken, um das genannte eine oder die mehreren Stützelemente (41) in der Nähe der genannten Seitenfläche (21) des dreidimensionalen Objektes (20) zurückzuhalten und die genannten Kontaktelemente (42) mit den genannten Führungselementen (30) in Kontakt zu halten.

2. Verfahren nach Anspruch 1, **dadurch gekennzeichnet, dass** es zumindest einen Schritt des Verschiebens des dreidimensionalen Druckers (10) an dem dreidimensionalen Objekt (20) während seiner Bildung vorsieht.

3. Verfahren nach Anspruch 2, **dadurch gekennzeichnet, dass** der Schritt des Verschiebens des dreidimensionalen Druckers (10) mittels des Zusammenwirkens zwischen den genannten Kontaktelementen (42) und den genannten Führungselementen (30) erfolgt.

4. Verfahren nach einem der vorhergehenden Ansprüche, **dadurch gekennzeichnet, dass** die genannten Rückhalteelemente (32) je eine Anschlagfläche (32A) umfassen, die im Hinblick auf die genannte Seitenfläche (21) des genannten dreidimensionalen Objektes (20) geneigt ist und dazu ausgerichtet ist, und dass das genannte zumindest eine Anschlagelement (46A) zumindest eine Anschlagfläche (46B) umfasst, die im Hinblick auf das genannte Stützelement (41) geneigt ist und dazu ausgerichtet ist, worin die genannte Anschlagfläche (32A) der genannten Rückhalteelemente (32) dazu eingerichtet ist, mit einer genannten Anschlagfläche (46B) des genannten einen Anschlagelementes (46A) in Kontakt zu kommen.

5. Dreidimensionales Drucksystem, umfassend einen dreidimensionalen Drucker (10), der mit zumindest einer mobilen Stützvorrichtung (40) versehen ist, und ein dreidimensionales Objekt (20), das mit einem oder mit mehreren Führungselementen (30) versehen ist, die in eine externe Seitenfläche (21) davon integriert sind, wobei das genannte dreidimensionale Objekt (20) mittels des genannten dreidimensionalen Druckers (10) hergestellt ist, und die genannte mobile Stützvorrichtung (40) dazu eingerichtet ist, mit dem genannten einen oder den mehreren Führungselementen (30) zusammenzuwirken, um die Verschiebung des genannten dreidimensionalen Druckers (10) an dem genannten dreidimensionalen Objekt (20) zu ermöglichen, worin die genannte mobile Stützvorrichtung (40) eines oder mehrere Stützelemente (41) umfasst, die je mit einem oder mehreren Kontaktelementen (42) und mit zumindest einem Anschlagelement (46A) versehen sind, und dass die genannten Führungselemente (30) dazu eingerichtet sind, mit dem genannten einen oder den mehreren Kontaktelementen (42) zusammenzuwirken, und je zumindest ein Rückhalteelement (32) umfassen, das dazu eingerichtet ist, mit den genannten Anschlagelementen (46A) derart zusammenzuwirken, um das genannte eine oder die mehreren Stützelemente (41) in der Nähe der genannten Seitenfläche (21) des dreidimensionalen Objektes (20) zurückzuhalten und die genannten Kontaktelemente (42) mit den genannten Führungselementen (30) in Kontakt zu halten, **dadurch gekennzeichnet, dass** die genannten Führungselemente (30) und Rückhalteelemente (32) mit dem genannten dreidimensionalen Objekt (20) einstückig ausgebildet sind.

## Revendications

1. Procédé de production d'un objet tridimensionnel (20), au moyen d'une imprimante tridimensionnelle mobile (10) comprenant un ou plusieurs organes de support (41) équipés chacun d'un élément de contact respectif (42) configuré pour venir en contact avec l'objet tridimensionnel (20) et équipés chacun d'au moins un organe de butée (46A), comprenant l'étape d'impression dudit objet tridimensionnel (20), **caractérisé en ce qu'**il comprend l'étape d'impression dudit objet tridimensionnel (20) et simultanément d'impression d'un ou plusieurs éléments de guidage (30), intégrés dans au moins une surface latérale externe (21) dudit objet tridimensionnel (20), configurés pour interagir avec lesdits éléments de contact (42) et munis d'éléments de retenue (32) intégrés dans l'au moins une surface latérale externe (21) dudit objet tridimensionnel (20), **caractérisé en ce que** les éléments de retenue (32) sont configurés pour interagir avec ledit au moins un organe de butée (46A) de manière à retenir lesdits un ou plusieurs organes de support (41) à proximité de ladite surface latérale (21) de l'objet tridimensionnel (20) et maintenir lesdits éléments de contact (42) en contact avec lesdits éléments de guidage (30).

2. Procédé selon la revendication 1, **caractérisé en ce qu'**il comprend au moins une étape de déplacement de l'imprimante tridimensionnelle (10) sur l'objet tridimensionnel (20) pendant sa formation.

3. Procédé selon la revendication 2, **caractérisé en ce que** l'étape de déplacement de l'imprimante tridimensionnelle (10) se produit au moyen de l'interaction entre lesdits éléments de contact (42) et lesdits éléments de guidage (30).

4. Procédé selon une quelconque revendication précédente, **caractérisé en ce que** lesdits éléments de retenue (32) comprennent chacun une surface de butée (32A) inclinée par rapport à ladite surface latérale (21) dudit objet tridimensionnel (20) et orientée vers elle, et **en ce que** ledit au moins un organe de butée (46A) comprend au moins une surface de butée (46B) inclinée par rapport audit organe de support (41) et orientée vers lui, dans lequel ladite surface de butée (32A) desdits éléments de retenue (32) est configurée pour venir en contact avec une dite surface de butée (46B) d'un dit organe de butée (46A).

5. Système d'impression tridimensionnelle, comprenant une imprimante tridimensionnelle (10) munie d'au moins un dispositif de support mobile (40), et un objet tridimensionnel (20) muni d'un ou plusieurs éléments de guidage (30) intégrés dans une surface latérale externe (21) de celui-ci, ledit objet tridimensionnel (20) étant produit au moyen de ladite imprimante tridimensionnelle (10), et ledit dispositif de support mobile (40) étant configuré pour interagir avec lesdits un ou plusieurs éléments de guidage (30) pour permettre le déplacement de ladite imprimante tridimensionnelle (10) sur ledit objet tridimensionnel (20), dans lequel ledit dispositif de support mobile (40) comprend un ou plusieurs organes de support (41) munis chacun d'un ou plusieurs éléments de contact (42) et d'au moins un organe de butée (46A), et en ce que lesdits éléments de guidage (30) sont configurés pour interagir avec lesdits un ou plusieurs éléments de contact (42) et comprennent chacun au moins un élément de retenue (32) configuré pour interagir avec lesdits organes de butée (46A) de manière à retenir lesdits un ou plusieurs organes de support (41) à proximité de ladite surface latérale (21) de l'objet tridimensionnel (20) et maintenir lesdits éléments de contact (42) en contact avec lesdits éléments de guidage (30), **caractérisé en ce que** lesdits éléments de guidage (30) et lesdits éléments de retenue (32) sont réalisés d'une seule pièce avec ledit objet tridimensionnel (20).
